# EUROPÄISCHE PATENTANMELDUNG

(11) **EP 3 786 131 A1**
(43) Veröffentlichungstag der Anmeldung: **03.03.2021**
(21) Anmeldenummer: 19193775.4
(22) Anmeldetag: 27.08.2019
(51) Int. Cl.: C04B 20/10, C04B 22/04, C04B 28/02, C04B 40/00, C04B 111/20

(54) **ZUSATZMITTEL FÜR MINERALISCHE BINDEMITTELZUSAMMENSETZUNGEN**

(71) Anmelder: SIKA TECHNOLOGY AG, 6340 Baar (CH)
(72) Erfinder: Bürge, Christian, 5503 Schafisheim (CH); Kurz, Christophe, 5304 Endingen (CH)
(74) Vertreter: Sika Patent Attorneys

(57) **Zusammenfassung**

Zusatzmittel für mineralische Bindemittelzusammensetzungen, insbesondere Mörtel oder Beton, zur Verbesserung der Frost-Beständigkeit und der Frost-Tausalz-Beständigkeit, umfassend
a) 0.01 - 10 Gew.-% eines Reduktionsmittels,
b) 0.01 - 10 Gew.-% eines Verdickungsmittels,
c) 0.01 - 20 Gew.-% eines Luftporenbildners und
d) mindestens ein Lösemittel.

## Beschreibung

### Technisches Gebiet

Die vorliegende Erfindung befasst sich mit Zusatzmitteln für mineralische Bindemittelzusammensetzungen, insbesondere Mörtel oder Beton, welche Luftporen bilden und dadurch die Frost-Beständigkeit und die Frost-Tausalz-Beständigkeit der mineralischen Bindemittelzusammensetzungen verbessern.

### Stand der Technik

Mineralische Bindemittelzusammensetzungen wie insbesondere Mörtel und Beton müssen belüftet werden, um beispielsweise die Bearbeitbarkeit zu verbessern oder um eine ausreichende Frost-Beständigkeit und/oder Frost-Tausalz-Beständigkeit (im Folgenden als FTB bezeichnet) zu erreichen.

Wasser hat die Eigenschaft sich beim Gefrieren auszudehnen. In Bindemittelzusammensetzungen wird daher bei Abkühlung unter 0°C flüssiges Wasser durch gefrierendes Wasser verdrängt, wobei ein hydrostatischer Druck erzeugt wird. Wird dabei die Festigkeit der Bindemittelzusammensetzung überschritten, kommt es zu Abplatzungen bis hin zur Zerstörung des Systems.

Wird der Bindemittelzusammensetzung beim Anmachen ein Luftporenbildner zugegeben, können stabile Luftporen erzeugt werden, welche auch nach der Aushärtung in der Bindemittelzusammensetzung vorliegen. Solche Luftporen bieten dem sich ausdehnenden Wasser Platz und verhindern so die erwähnte Schädigung des Systems.

Aus dem Stand der Technik sind verschiedene flüssige Luftporenbildner bekannt. Beispielsweise werden in der DE 195 28 912 oberflächenaktive, Fettsäure-basierte Substanzen in Kombination mit nicht-ionischen Tensiden offenbart. In WO 95/26936 wird hingegen die Verwendung von Tallöl und Derivaten davon als Luftporenbildner offenbart.

Ebenso sind in der Praxis feste Luftporenbildner wie z.B. das Produkt Sika® Aer Solid (Sika Schweiz AG) im Einsatz, welche aus Polymer-ummantelten Lufthohlkugeln bestehen.

Die bekannten Luftporenbildner weisen jedoch verschiedene Nachteile auf. So stabilisieren Tenside nur während des Mischvorgangs eingeschlagene Luft. Die eingetragene Luftmenge sowie die Qualität der Luftporen ist in diesem Fall stark abhängig unter anderem vom Mischvorgang, der Temperatur, dem verwendeten Bindemittel, den Zuschlägen, der Qualität des Anmachwassers, der Transportzeit oder der Viskosität beim Verarbeiten der Bindemittelzusammensetzung.

Konkret muss bei Verwendung von flüssigen Luftporenbildnern die Dosierung für jede Anwendung separat eingestellt werden und es muss eine umfassende Qualitätskontrolle durchgeführt werden. Dies verursacht einen erheblichen Aufwand und entsprechende Kosten.

Neuere Produkte wie Sika® Aer Solid haben gegenüber den flüssigen Luftporenbildnern den Vorteil, dass die Luftporen bereits vorgefertigt zugegeben werden und daher beispielsweise die Sensitivität bezüglich der Bindemittel geringer ist. Nachteilig ist jedoch, dass ein Teil der festen Luftporen beim Mischprozess zerstört werden. Dieser Anteil schwankt je nach Mischertyp, Mischzeit, Viskosität der Mischung so wie der Form der Zuschläge.

Aus der EP 3 033 313 ist ein Verfahren zur Herstellung einer mineralischen Bindemittelzusammensetzung bekannt, bei welchem ein Luftporenbildner, welcher ein Reduktionsmittel in Partikelform ist, zum Einsatz kommt. Solche Luftporenbildner haben den Vorteil, dass sie weniger empfindlich auf weitere Parameter des Mischvorgangs und/oder der mineralischen Bindemittelzusammensetzung reagieren. Allerdings sind solche festen, pulverförmigen Zusatzmittel auf bestehenden, auf die Dosierung von Flüssigkeiten ausgelegten Anlagen in der Praxis oftmals nicht verwendbar oder bedeuten zumindest erheblich mehr Aufwand.

Das Erzielen einer ausreichenden FTB in mineralischen Bindemittelzusammensetzungen ist daher mit den bislang bekannten Massnahmen relativ aufwändig. Es besteht daher nach wie vor Bedarf nach neuen Lösungen zur Verbesserung der FTB von mineralischen Bindemittelzusammensetzungen, welche die vorstehend genannten Nachteile überwinden.

### Darstellung der Erfindung

Aufgabe der vorliegenden Erfindung ist es daher ein Zusatzmittel für mineralische Bindemittel zur Verfügung zu stellen, welches die oben genannten Nachteile überwinden kann und eine verbesserte FTB gegenüber einer mineralischen Bindemittelzusammensetzung, die das Zusatzmittel nicht enthält, bewirkt.

Überraschenderweise wurde gefunden, dass ein Zusatzmittel gemäss vorliegendem Anspruch 1 die Aufgabe löst. Insbesondere kann durch ein solches Zusatzmittel der Luftgehalt einer mineralischen Bindemittelzusammensetzung deutlich erhöht werden im Vergleich zu einer ansonsten gleichen Zusammensetzung aber ohne das Zusatzmittel. Darüber hinaus ist solch ein Zusatzmittel wenig sensitiv auf den Mischvorgang und/oder weitere Komponenten der mineralischen Bindemittelzusammensetzung. Auch bewirkt ein Zusatzmittel gemäss vorliegendem Anspruch 1, dass Luftporen mit einem Durchmesser von 50 - 300 µm und einem Abstandsfaktor von < 0.2 mm, welche besonders vorteilhaft für die Erzielung von FTB mineralischer Bindemittelzusammensetzungen sind, gebildet werden. Dies bewirkt, dass ein Zusatzmittel gemäss vorliegendem Anspruch 1 die Frost-Beständigkeit und/oder die Frost-Tausalz-Beständigkeit einer mineralischen Bindemittelzusammensetzung signifikant verbessert im Vergleich zu einer Referenz-Mischung ohne Zusatzmittel.

Desweiteren haben Zusatzmittel gemäss vorliegendem Anspruch 1 den Vorteil, dass sie die Verarbeitbarkeit einer mineralischen

Bindemittelzusammensetzung nicht signifikant beeinflussen. Darüber hinaus verzögern solche Zusatzmittel den Aufbau von Druckfestigkeit mineralischer Bindemittelzusammensetzungen in einem für die Praxis akzeptablen Bereich.

Zusatzmittel gemäss vorliegendem Anspruch 1 haben schliesslich den Vorteil, dass sie lagerstabil und sicher zu handhaben sind. Insbesondere zeigen erfindungsgemässe Zusatzmittel auch nach längerer Lagerung, beispielsweise nach Lagerung für 6 Monate, bei Temperaturen zwischen 4 °C - 40 °C keine Reaktion des Reduktionsmittels mit dem Lösemittel, insbesondere mit Wasser, und neigen nicht zum sedimentieren oder agglomerieren. Insbesondere können solche Zusatzmittel mittels bestehender Dosier- und Mischanlagen für flüssige Zusatzmittel z.B. in Betonwerken verarbeitet werden. Dies führt zu einer gleichbleibenden Qualität der so hergestellten mineralischen Bindemittelzusammensetzungen und zu einem geringen Investitionsbedarf seitens der Anwender.

### Wege zur Ausführung der Erfindung

Der Begriff "Luft" ist vorliegend breit auszulegen und umfasst sämtliche bei Normalbedingungen gasförmigen Substanzen.

Ein erster Aspekt der vorliegenden Erfindung ist demnach ein Zusatzmittel für mineralische Bindemittelzusammensetzungen umfassend, jeweils bezogen auf die Gesamtmasse des Zusatzmittels,
a) 0.01 - 10 Gew.-%, bevorzugt 0.05 - 8 Gew.-%, besonders bevorzugt 0.1 - 5 Gew.-%, insbesondere 0.3 - 3 Gew.-% eines Reduktionsmittels,
b) 0.01 - 10 Gew.-%, bevorzugt 0.02 - 5 Gew.-%, besonders bevorzugt 0.04 - 3 Gew.-%, ganz besonders bevorzugt 0.08 - 1 Gew.-%, insbesondere 0.1 - 1 Gew.-% eines Verdickungsmittels,
c) 0.01 - 20 Gew.-%, bevorzugt 0.02 - 10 Gew.-%, besonders bevorzugt 0.05 - 5 Gew.-%, ganz besonders bevorzugt 0.1 - 3 Gew.-%, insbesondere 1 - 3 Gew.-% eines Luftporenbildners, und
d) mindestens ein Lösemittel.

Unter dem Ausdruck "mineralische Bindemittelzusammensetzung" wird vorliegend insbesondere eine Zusammensetzung enthaltend wenigstens ein mineralisches Bindemittel sowie gegebenenfalls Aggregate, Zusatzstoffe, Zusatzmittel und/oder Wasser verstanden. Zudem können grundsätzlich auch noch weitere Komponenten, z.B. Armierungsfasern oder Pigmente, in der mineralischen Bindemittelzusammensetzung vorliegen. Die mineralische Bindemittelzusammensetzung kann durch Zugabe von Wasser und Vermischen zu einer aushärtbaren mineralische Bindemittelzusammensetzung angemacht werden. Grundsätzlich kann die mineralische Bindemittelzusammensetzung flüssig, pastös oder in festem Zustand vorliegen.

Eine Dichte der mineralischen Bindemittelzusammensetzung, insbesondere in ausgehärtetem Zustand, ist insbesondere ≥ 1.0 kg/L, bevorzugt ≥ 1.5 kg/L, besonders bevorzugt ≥ 2.0 kg/L, im Besonderen im Bereich von 2.1 - 2.6 kg/L.

Insbesondere ist die mineralische Bindemittelzusammensetzung keine Leichtbetonzusammensetzung oder keine mineralische Bindemittelzusammensetzung mit einer Dichte < 1.5 kg/L oder < 1.0 kg/L.

Die mineralische Bindemittelzusammensetzung ist insbesondere eine zementöse Bindemittelzusammensetzung. Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 50 Gew.-%, im Speziellen wenigstens 65 Gew.-%, Zement verstanden.

Ein mineralisches Bindemittel ist ein Bindemittel, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Insbesondere enthält das mineralische Bindemittel oder die Bindemittelzusammensetzung ein hydraulisches Bindemittel, bevorzugt Zement. Besonders bevorzugt ist Zement vom Typ CEM I, II, III oder IV (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 50 Gew.-%, im Speziellen wenigstens 65 Gew.-%. Gemäss einer weiteren vorteilhaften Ausführungsform umfasst das mineralische Bindemittel wenigstens 95 Gew.-% hydraulisches Bindemittel, insbesondere Zement.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latent hydraulische und/oder puzzolanische Bindemittel sind z.B. Schlacke, Flugasche, gebrannter Schiefer und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 20 - 50 Gew.-%, latent hydraulische und/oder puzzolanische Bindemittel sowie inerte Stoffe.

Das Zusatzmittel der vorliegenden Erfindung umfasst ein Reduktionsmittel. Unter einem "Reduktionsmittel" wird vorliegend insbesondere eine Substanz verstanden, welche Wasser zu reduzieren vermag. Das Reduktionsmittel verfügt mit Vorteil über ein Normalpotential oder Reduktionspotential kleiner -0.7 V, insbesondere kleiner -0.9 V, bevorzugt kleiner -1.5 V, speziell im Bereich von -0.9 bis -2.5 V, bezogen auf die Normal-Wasserstoffelektrode bei Standardbedingungen (T = 298.15 K; p = 1 atm; Ionenaktivität = 1).

Das Reduktionsmittel umfasst bevorzugt ein Metall, insbesondere ein unedles Metall. Bevorzugt ist das Metall ausgewählt aus der Gruppe bestehend aus Aluminium, Magnesium, Mangan, Zink, und/oder Vanadium. Dabei sind insbesondere auch Kombinationen von mehreren verschiedenen Metallen möglich. Metalle liegen vorliegend insbesondere in der Oxidationsstufe 0 (Null) vor. Salze oder Metalloxide fallen entsprechend nicht unter den Begriff der Metalle.

Im Besonderen umfasst das Reduktionsmittel Aluminium oder Zink oder es besteht daraus. Das Aluminium oder Zink ist dabei insbesondere metallisches Aluminium oder Zink und kein Aluminium- oder Zinksalz. Aluminium als Reduktionsmittel hat sich als besonders zweckmässig erwiesen, da es hinsichtlich der FTB besonders vorteilhaft ist, einfach handhabbar ist und gut in mineralischen Bindemittelzusammensetzungen einmischbar ist.

Je nach Anforderungen können aber auch andere Metalle oder andere nicht metallische Reduktionsmittel geeignet sein.

Das Reduktionsmittel wird in Partikelform verwendet. Dies bedeutet, dass das Reduktionsmittel eine Vielzahl von einzelnen Partikeln umfasst.

Die Partikelgrösse, deren Verteilung oder die durchschnittliche Partikelgrösse des Reduktionsmittels werden insbesondere durch Laserbeugung, bevorzugt entsprechend Norm ISO 13320:2009, bestimmt. Insbesondere wird ein Gerät Mastersizer 2000 mit einer Dispergiereinheit Hydro 2000G und die Software Mastersizer 2000 der Firma Malvern Instruments GmbH (Deutschland) verwendet. Als Messmedium ist z.B. Isopropanol geeignet. Die durchschnittliche Partikelgrösse entspricht vorliegend insbesondere dem D50-Wert (50% der Partikel sind kleiner als der angegebene Wert, 50% entsprechend grösser).

Vorliegend wurde gefunden, dass es zum Erreichen einer guten FTB entscheidend ist, dass die durchschnittliche Partikelgrösse D50 des Reduktionsmittels < 25 µm, insbesondere < 20 µm, im Speziellen < 10 µm misst. Wird eine durchschnittliche Partikelgrösse von 25 µm überschritten, nimmt insbesondere die FTB signifikant ab. Dies dürfte auf eine inadäquate Anzahl und Verteilung der Poren in der Bindemittelmatrix und eine für das Erreichen einer hohen FTB nicht geeignete Grössenverteilung der Poren zurückzuführen sein.

Gemäss einer weiter bevorzugten Ausführungsform beträgt eine durchschnittliche Partikelgrösse D50 des Reduktionsmittels 0.1 - 20 µm, insbesondere 0.2 - 18 µm, bevorzugt 0.5 - 15 µm, im Besonderen 1 - 10 µm. Ganz besonders bevorzugt beträgt die durchschnittliche Partikelgrösse 2 - 8 µm.

Ein Siebrückstand ≥ 45 µm der Partikel des Reduktionsmittels beträgt vorzugsweise weniger als 1 Gew.-%, bevorzugt weniger als 0.5 Gew.-%, weiter bevorzugt weniger als 0.2 Gew.-% oder weniger als 0.1 Gew.-%.

Derartige Partikelgrössen sind in Bezug auf die FTB besonders vorteilhaft. Zudem hat sich gezeigt, dass die Porengrössen in diesen Fällen äusserst homogen verteilt sind.

In einer besonders vorteilhaften Ausführungsform liegen die Partikel des Reduktionsmittels, bevorzugt Aluminium, Magnesium, Mangan, Zink, und/oder Vanadium, insbesondere Aluminium oder Zink, in einer Form vor, in der sie vor Luftfeuchtigkeit geschützt aber nicht passiviert sind.

Beispielsweise können die Partikel oberflächenbehandelt, insbesondere hydrophobiert, vorliegen. Beschichtungen oder Inhibitoren, die die Reaktion des Reduktionsmittels mit Wasser unterbinden, wie beispielsweise Schichten aus SiO₂, Al₂O₃ oder Polyacrylaten, sind allerdings ausgeschlossen.

Insbesondere kann es vorteilhaft sein, ein sogenanntes non-leafing MetallPigment, bevorzugt non-leafing Aluminium, Magnesium, Mangan, Zink, und/oder Vanadium, insbesondere non-leafing Aluminium oder Zink in einem Zusatzmittel gemäss vorliegender Erfindung zu verwenden. Es hat sich gezeigt, dass solche non-leafing Metall-Pigmente zu besonders homogener Verteilung des Reduktionsmittels in der mineralischen Bindemittelzusammensetzung und damit zu einer homogenen Verteilung der Luftporen führen, was vorteilhaft hinsichtlich der FTB ist.

Non-leafing Metall-Pigmente sind Metallpartikel, die von einem Bindemittel vollständig benetzt werden und daher nicht oder kaum separieren. Non-leafing Metall-Pigmente werden durch Zugabe oberflächenaktiver Substanzen zu den Metallpartikeln hergestellt, z.B. durch Verwendung von Mahlhilfsmitteln, wie z.B. Fettsäuren, beim Zerkleinern.

Das Reduktionsmittel hat einen Anteil von 0.01 - 10 Gew.-%, bevorzugt 0.05 - 8 Gew.-%, besonders bevorzugt 0.1 - 5 Gew.-%, insbesondere 0.3 - 3 Gew.-%, jeweils bezogen auf die gesamte Masse des Zusatzmittels.

Das Zusatzmittel der vorliegenden Erfindung umfasst ein Verdickungsmittel. Ein Verdickungsmittel ist vorliegend bevorzugt ein üblicherweise für wässrige Zubereitungen einsetzbares Verdickungsmittel. Solche Verdickungsmittel sind dem Fachmann an sich bekannt.

Bevorzugt ist das Verdickungsmittel ausgewählt aus der Gruppe bestehend aus Schichtsilikaten, insbesondere Bentonit, Polysacchariden, insbesondere Stärke, Pektin, Diutan Gum, Xanthan Gum, Gellan Gum, Guar Gum, Welan Gum, und/oder Carrageen, Cellulosen, insbesondere Carboxymethylcellulosen und/oder Celluloseether wie Hydroxyalkylcellulose, Polyvinylalkoholen, Poly(meth)acrylsäuren, Polyacrylamiden, Polyvinylpyrrolidonen, Polyethylenglykolen, Polyurethanen, Polyamiden, und/oder Proteinen, insbesondere Gelatine und/oder Casein.

In einer bevorzugten Ausführungsform ist das Verdickungsmittel natürlichen Ursprungs, insbesondere Diutan Gum und/oder Welan Gum. In einer anderen bevorzugten Ausführungsformen ist das Verdickungsmittel ein ASE (alkali swellabe emulsion) und/oder ein HASE (hydrophobically modified alkali swellable acrylate) Verdicker (z. B Tafigel AP). Es ist möglich, und in manchen Fällen auch bevorzugt, zwei oder mehrere Verdickungsmittel in einem Zusatzmittel der vorliegenden Erfindung zu verwenden.

Das Verdickungsmittel hat einen Anteil von 0.01 - 10 Gew.-%, bevorzugt 0.02 - 5 Gew.-%, besonders bevorzugt 0.04 - 3 Gew.-%, ganz besonders bevorzugt 0.08 - 1 Gew.-%, insbesondere 0.1 - 1 Gew.-%, jeweils bezogen auf die gesamte Masse des Zusatzmittels.

Das Zusatzmittel der vorliegenden Erfindung umfasst weiter einen Luftporenbildner. Der Begriff "Luftporenbildner" steht in diesem Zusammenhang insbesondere für eine Substanz welche, falls diese bei der Herstellung einer mineralischen Bindemittelzusammensetzung vorliegt oder zugegeben wird, die durch das Reduktionsmittel gebildeten Luftporen in der mineralischen Bindemittelzusammensetzung stabilisiert. Die Luftporen sind insbesondere während des Transports und/oder der Verarbeitung der mineralischen Bindemittelzusammensetzung im Wesentlichen stabil. Unter dem Begriff "Luftporenbildner" wird vorliegend somit auch ein Luftporenstabilisierer verstanden. Als Luftporenbildner geeignet sind beispielsweise Wurzelharze, Ligninsulfonate, Carboxylate, Proteinsäuren sowie generell nicht-ionische, kationische, anionische und/oder amphotere Tenside. Es können auch Mischungen von zwei oder mehr Luftporenbildner eingesetzt werden. In einer besonders bevorzugten Ausführungsform ist der Luftporenbildner Natriumlaurylethersulfat. In einer weiteren besonders bevorzugten Ausführungsform ist der Luftporenbildner Tallöl, insbesondere destilliertes Tallöl.

Der Luftporenbildner hat einen Anteil von 0.01 - 20 Gew.-%, bevorzugt 0.02 - 10 Gew.-%, besonders bevorzugt 0.05 - 5 Gew.-%, ganz besonders bevorzugt 0.1 - 3 Gew.-%, insbesondere 1 - 3 Gew.-%, jeweils bezogen auf die gesamte Masse des Zusatzmittels.

Weiter umfasst das Zusatzmittel der vorliegenden Erfindung mindesten ein Lösemittel. Das mindestens eine Lösemittel kann ein organisches Lösemittel sein und ausgewählt werden aus der Gruppe bestehend aus Alkoholen, Ethern, Ketonen, Carbonsäuren, Estern oder Mischungen daraus. Insbesondere kann das Lösemittel ausgewählt sein aus der Gruppe umfassend Ethanol, iso-Propanol, n-Butanol, Glycerol, Aceton, 2-Butanon, 2-Pentanon, 3-Pentanon, Essigsäure, Ethylacetat oder Mischungen daraus. Das mindestens eine Lösemittel kann auch Wasser sein.

In einer besonders bevorzugten Ausführungsform ist das mindestens eine Lösemittel Wasser. Wasser kann jedes verfügbare Wasser sein, wie destilliertes Wasser, gereinigtes Wasser, Leitungswasser, Mineralwasser, Quellwasser und Brunnenwasser. Die Verwendung von Abwasser ist nur dann möglich, wenn die Zusammensetzung dieses Abwassers bekannt ist und keine der enthaltenen Verunreinigungen die Funktionalität einer anderen Komponente der Zusammensetzung der vorliegenden Erfindung beeinträchtigt. Die Verwendung von Salzwasser ist nur bis zu einem maximalen Chloridgehalt von 2 Gew.-% möglich, da ansonsten die Gefahr von Korrosion von Stahlbewehrung besteht.

Der Anteil Wasser in einem Zusatzmittel der vorliegenden Erfindung unterliegt keiner besonderen Beschränkung, ausser dass er nicht Null sein kann. Es ist aber beispielsweise möglich, dass sehr kleine Mengen Wasser vorhanden sind, z.B. < 1 Gew.-% bezogen auf die gesamte Masse des Zusatzmittels. Im Allgemeinen ist es aber bevorzugt, wenn das Zusatzmittel der vorliegenden Erfindung in Form einer wässrige Suspension oder Aufschlämmung vorliegt. In diesem Fall ist der Anteil an Wasser an der gesamten Masse des Zusatzmittels vorteilhaft > 50 Gew.-%, bevorzugt > 60 Gew.-%, besonders bevorzugt > 70 Gew.-%, ganz besonders bevorzugt > 80 Gew.-%, im Besonderen > 90 Gew.-% oder > 95 Gew.-%.

Ein Zusatzmittel der vorliegenden Erfindung kann zudem einen oder mehrere Stoffe ausgewählt aus der Gruppe der Füllstoffe, Benetzungshilfsmittel, Lösungsvermittler, und Biozide umfassen.

In einer bevorzugten Ausführungsform umfasst ein Zusatzmittel der vorliegenden Erfindung mindestens ein Benetzungshilfsmittel. Benetzungshilfsmittel erleichtern die Einarbeitbarkeit des Reduktionsmittels in wässrige Zubereitungen und verbessern die Stabilität der Zusatzmittel. Benetzungshilfsmittel werden besonders vorteilhaft in einer Menge von 0.001 - 1000 Massenteile, ganz besonders vorteilhaft von 0.01 - 200 Massenteile, im speziellen von 1 - 150 Massenteile, jeweils bezogen auf 100 Massenteile des Reduktionsmittels, eingesetzt. Als besonders geeignetes Benetzungshilfsmittel haben sich Siloxane-basierte Tenside, alkoxylierte Acetyldiole, Fettsäurederivate wie alkoxylierte Fettsäuren, alkoxylierte Fettsäurealkohole, Fettalkoholsulfate, Ester von Fettsäuren, insbesondere Ester von Fettsäuren und Methanol, Sorbitan, Glycerol oder Pentarythritol, und Fettsäureamide sowie perfluorierte Tenside wie Perfluoroctansulfonsäure oder Perfluoroctancarbonsäuren herausgestellt In einer bevorzugten Ausführungsform ist das Benetzungshilfsmittel ein nicht-ionisches Siloxan-basiertes Tensid. In einer weiteren bevorzugten Ausführungsform ist das Benetzungshilfsmittel ein ethoxyliertes Acetyldiol. In einer weiteren bevorzugten Ausführungsform ist das Benetzungshilfsmittel ein Fettsäurealkoholpolyethylenglykol.

Lösungsvermittler werden vorteilhaft eingesetzt, um das Verdickungsmittel leichter in ein wässriges Zusatzmittel einzuarbeiten. Als besonders geeignet haben sich in diesem Zusammenhang Alkylenglykole, insbesondere Methyltriglykol sowie Ethylenglykole, herausgestellt. In einer Ausführungsform der vorliegenden Erfindung umfasst das Zusatzmittel daher mindestens ein Ethylenglykol mit einem Anteil von 0.01 - 5 Gew-%, bevorzugt 0.1 - 2 Gew.-%, jeweils bezogen auf die gesamte Masse des Zusatzmittels. Vorteilhafterweise wird der Lösungsvermittler mit dem Verdickungsmittel vermischt, bevor dieses in das Lösemittel, insbesondere in Wasser, oder eine wässrige Zubereitung eingearbeitet wird.

In einer bevorzugten Ausführungsform umfasst ein Zusatzmittel der vorliegenden Erfindung mindestens ein Biozid mit einem Anteil von 0.01 - 1 Gew-%, bevorzugt 0.05 - 0.5 Gew.-%, jeweils bezogen auf die gesamte Masse des Zusatzmittels.

Eine besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Welan Gum,
c) 0.01 - 20 Gew.-% Tallöl, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Natriumlaurylethersulfat, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Welan Gum,
c) 0.01 - 20 Gew.-% Natriumlaurylethersulfat, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% HASE Verdicker,
c) 0.01 - 20 Gew.-% Tallöl, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% HASE Verdicker,
c) 0.01 - 20 Gew.-% Natriumlaurylethersulfat, und
d) mindestens 50 Gew.-% Wasser.

Eine weitere besonders bevorzugte Ausführungsform eines erfindungsgemässen Zusatzmittels umfasst:
e) 0.01 - 10 Gew.-% Aluminium in Partikelform mit einer Partikelgrösse D50 von 0.1 - 20 µm,
f) 0.01 - 10 Gew.-% ASE Verdicker,
g) 0.01 - 20 Gew.-% Tallöl, und
h) mindestens 50 Gew.-% Wasser.

Eine weitere besonders bevorzugte Ausführungsform eines erfindungsgemässen Zusatzmittels umfasst:
e) 0.01 - 10 Gew.-% Aluminium in Partikelform mit einer Partikelgrösse D50 von 0.1 - 20 µm,
f) 0.01 - 10 Gew.-% ASE Verdicker,
g) 0.01 - 20 Gew.-% Natriumlaurylethersulfat, und
h) mindestens 50 Gew.-% Wasser.

Eine weitere besonders bevorzugte Ausführungsform eines erfindungsgemässen Zusatzmittels umfasst:
a) 0.01 - 10 Gew.-% Zink in Partikelform mit einer Partikelgrösse D50 von 0.1 - 20 µm,
b) 0.01 - 10 Gew.-% Diutan Gum,
c) 0.01 - 20 Gew.-% Tallöl, und
d) mindestens 50 Gew.-% Wasser.

Eine weitere besonders bevorzugte Ausführungsform eines erfindungsgemässen Zusatzmittels umfasst:
a) 0.01 - 10 Gew.-% Zink in Partikelform mit einer Partikelgrösse D50 von 0.1 - 20 µm,
b) 0.01 - 10 Gew.-% Diutan Gum,
c) 0.01 - 20 Gew.-% Natriumlaurylethersulfat, und
d) mindestens 50 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl,
d) 0.01 - 5 Gew.-% Methyltriglykol, und
e) mindestens 40 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Natriumlaurylethersulfat,
d) 0.01 - 5 Gew.-% Methyltriglykol, und
e) mindestens 40 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl,
d) 0.01 - 5 Gew.-% Ethylenglykol, und
e) mindestens 40 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Natriumlaurylethersulfat,
d) 0.01 - 5 Gew.-% Ethylenglykol, und
e) mindestens 40 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl,
d) 0.0001 - 15 Gew.-% nicht-ionisches Siloxan-basiertes Tensid,
e) 0.01 - 5 Gew.-% Ethylenglykol, und
f) mindestens 35 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl,
d) 0.0001 - 15 Gew.-% ethoxyliertes Acetyldiol,
e) 0.01 - 5 Gew.-% Ethylenglykol, und
f) mindestens 35 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Tallöl,
d) 0.0001 - 15 Gew.-% Fettsäurealkoholpolyethylenglykol,
e) 0.01 - 5 Gew.-% Ethylenglykol, und
f) mindestens 35 Gew.-% Wasser.

Eine weitere besonders bevorzugte Ausführungsform eines erfindungsgemässen Zusatzmittels umfasst:
a) 0.01 - 10 Gew.-% Aluminium in Partikelform mit einer Partikelgrösse D50 von 0.1 - 20 µm,
b) 0.01 - 10 Gew.-% Diutan Gum,
c) 0.01 - 20 Gew.-% Natriumlaurylethersulfat,
d) 0.0001 - 15 Gew.-% nicht-ionisches Siloxan-basiertes Tensid,
e) 0.01 - 5 Gew.-% Methyltriglykol, und
f) mindestens 35 Gew.-% Wasser.

Eine weitere besonders bevorzugte Ausführungsform eines erfindungsgemässen Zusatzmittels umfasst:
g) 0.01 - 10 Gew.-% Aluminium in Partikelform mit einer Partikelgrösse D50 von 0.1 - 20 µm,
h) 0.01 - 10 Gew.-% Diutan Gum,
i) 0.01 - 20 Gew.-% Natriumlaurylethersulfat,
j) 0.0001 - 15 Gew.-% ethoxyliertes Acetyldiol,
k) 0.01 - 5 Gew.-% Ethylenglykol, und
I) mindestens 35 Gew.-% Wasser.

Eine weitere besonders bevorzugte Ausführungsform eines erfindungsgemässen Zusatzmittels umfasst:
g) 0.01 - 10 Gew.-% Aluminium in Partikelform mit einer Partikelgrösse D50 von 0.1 - 20 µm,
h) 0.01 - 10 Gew.-% Diutan Gum,
i) 0.01 - 20 Gew.-% Natriumlaurylethersulfat,
j) 0.0001 - 15 Gew.-% Fettsäurealkoholpolyethylenglykol,
k) 0.01 - 5 Gew.-% Ethylenglykol, und
I) mindestens 35 Gew.-% Wasser.

Das Zusatzmittel der vorliegenden Erfindung liegt bevorzugt in flüssiger oder pastöser Form vor. Der Begriff "flüssige Form" meint vorliegend eine Viskosität bei 20 °C von nicht höher als 2000 mPas, bevorzugt nicht höher als 500 mPas, besonders bevorzugt nicht höher als 200 mPas. Der Begriff "pastöse Form" meint vorliegend eine Viskosität bei 20°C von 2'000 - 10'000 mPas, bevorzugt 2'000 - 4'000 mPas. Solche Viskositäten erlauben eine einfache Dosierung erfindungsgemässer Zusatzmittel beispielsweise auf bestehenden Anlagen in einem Betonwerk. In einer ganz besonders bevorzugten Ausführungsform liegt das Zusatzmittel in flüssiger Form mit einer Viskosität von nicht höher als 200 mPas bei 20°C vor.

Die Viskosität kann auf einem Brookfield-Viskometer der Type RVT mit der Spindel 2 bei 100 s⁻¹ und 20 °C bestimmt werden.

Ohne an die Theorie gebunden sein zu wollen, wird davon ausgegangen, dass das Reduktionsmittel beim Anmachen der mineralischen Bindemittelzusammensetzung mit dem Anmachwasser in Redoxreaktionen reagiert. Dabei wird unter anderem Wasserstoff gebildet, welcher wiederum für die Porenbildung in der mineralischen Bindemittelzusammensetzung sorgt. Somit werden die Luftporen im Wesentlichen erst nach dem Ende des Mischprozesses gebildet. Durchmesser und Abstandsfaktor der Luftporen sind daher nicht oder jedenfalls kaum abhängig vom Mischprozess.

Zusatzmittel der vorliegenden Erfindung können durch vermischen der einzelnen Komponenten hergestellt werden. Die Art und Weise des Vermischens unterliegt dabei keinen besonderen Einschränkungen und kann in dem Fachmann an sich bekannter Weise erfolgen. Zusatzmittel der vorliegenden Erfindung können beispielsweise kontinuierlich oder diskontinuierlich hergestellt werden. Sie können beispielsweise mit Hilfe von Rühraggregaten, z.B. Propellerrühren, Dispergatoren, Spalt-Homogenisatoren, Rotor-Stator-Systemen, Mischrohren, Extrudern, Knetern, Mühlen, insbesondere Kugelmühlen, hergestellt werden.

Die Reihenfolge der Zugabe der einzelnen Bestandteile eines erfindungsgemässen Zusatzmittels bei dessen Herstellung unterliegt ebenfalls keiner besonderen Beschränkung. Es kann allerdings vorteilhaft sein, den Verdicker mit einem möglicherweise vorhandenen Lösungsvermittler zu mischen, bevor dieser in die wässrige Phase eingearbeitet wird. Es kann weiter vorteilhaft sein, das Reduktionsmittel mit einem möglicherweise vorhandenen Benetzungshilfsmittel zu mischen, bevor es in die wässrige Phase eingearbeitet wird. Andere Mischreihenfolgen sind aber ebenfalls möglich.

Die Zusatzmittel der vorliegenden Erfindung sind lagerstabil und sicher zu handhaben. Insbesondere zeigen erfindungsgemässe Zusatzmittel auch nach längerer Lagerung, beispielsweise nach Lagerung für 6 Monate, bei Temperaturen zwischen 4 °C - 40 °C keine Reaktion des Reduktionsmittels mit dem Lösungsmittel, insbesondere mit Wasser, und neigen nicht zum sedimentieren oder agglomerieren.

Ein weiterer Aspekt der vorliegenden Erfindung ist die Verwendung eines Zusatzmittels umfassend
a) 0.01 - 10 Gew.-% eines Reduktionsmittels,
b) 0.01 - 10 Gew.-% eines Verdickungsmittels,
c) 0.01 - 20 Gew.-% eines Luftporenbildners und
d) mindestens ein Lösemittel,
zur Einführung von Luftporen in eine mineralische Bindemittelzusammensetzung, insbesondere eine Beton- oder Mörtelzusammensetzung, und/oder zur Verbesserung der FTB der mineralischen Bindemittelzusammensetzung. Mineralische Bindemittelzusammensetzungen sind dabei wie oben definiert.

Die Verbesserung der FTB wird insbesondere gemäss Norm SIA 262-1 Anhang C und in Bezug auf eine entsprechend Referenzprobe ohne Luftporenbildner bestimmt.

Mit Vorteil wird das Zusatzmittel der vorliegenden Erfindung so dosiert, dass der Anteil an Reduktionsmittel von 0.0005 - 0.1 Gew.-%, bevorzugt 0.001 - 0.05 Gew.-%, insbesondere 0.002 - 0.04 Gew.-%, speziell 0.002 - 0.03 Gew.-% oder 0.0025 - 0.02 Gew.-%, bezogen auf den Bindemittelgehalt der Bindemittelzusammensetzung, beträgt. Dadurch wird eine optimale Verteilung der Poren erreicht und die FTB wird weiter verbessert.

Ein weiterer Aspekt der vorliegenden Erfindung bezieht sich auf eine mineralische Bindemittelzusammensetzung. Die mineralische Bindemittelzusammensetzung kann beispielsweise in flüssigem, pastösem oder festem Zustand vorliegen.

Die mineralische Bindemittelzusammensetzung umfasst wenigstens ein mineralisches Bindemittel wie vorgängig beschrieben, sowie ein wie vorstehend beschriebenes Zusatzmittel umfassend ein Reduktionsmittel, einen Verdicker, einen Luftporenbildner und Lösemittel, sowie wenigstens eine weitere Komponente ausgewählt aus einem Füllmaterial, Aggregaten und/oder einem Betonzusatzmittel.

Die mineralische Bindemittelzusammensetzung kann mit Wasser angemacht werden. Das Gewichtsverhältnis von Wasser zu Bindemittel ("w/z"-Wert) beim Anmachen der mineralischen Bindemittelzusammensetzung beträgt mit Vorteil 0.2 - 0.8, insbesondere 0.3 - 0.6, im Besonderen 0.35 - 0.55.

Der pH-Wert während der Herstellung der mineralischen Bindemittelzusammensetzung liegt im basischen Bereich, bevorzugt im Bereich ≥ 8, weiter bevorzugt im Bereich ≥ 10 oder ≥ 12.

Die mineralische Bindemittelzusammensetzung weist 5 Minuten nach dem Anmachen mit Wasser und 30 Minuten nach dem Anmachen mit Wasser bevorzugt einen Luftgehalt von wenigstens 2 Vol-%, bevorzugt wenigstens 3 Vol-%, speziell bevorzugt 4 - 10 Vol-% auf. Der Luftgehalt wird dabei bevorzugt nach Norm EN 1015-7 bestimmt.

Die ausgehärtete mineralische Bindemittelzusammensetzung entspricht mit Vorteil der gemäss Norm EN 206-1 für die FTB relevanten Expositionsklasse XF1, bevorzugt XF2, insbesondere XF3, besonders bevorzugt XF4. Es können aber auch Expositionsklassen mit entsprechender FTB aus anderen Normungskreisen, beispielsweise ASTM oder chinesische Normen, erreicht werden.

Ein weiterer Aspekt der Erfindung betrifft einen ausgehärteter Formkörper, insbesondere ein Bauwerk oder ein Bestandteil eines Bauwerks, enthaltend eine mit Wasser ausgehärtete mineralische Bindemittelzusammensetzung wie sie vorstehend beschreiben ist.

Ein letzter Aspekt der vorliegenden Erfindung betrifft einen Prozess zur Herstellung einer mineralischen Bindemittelzusammensetzung umfassend die Schritte
a) Zugabe eines Zusatzmittels umfassend
   - 0.01 - 10 Gew.-% eines Reduktionsmittels,
   - 0.01 - 10 Gew.-% eines Verdickungsmittels,
   - 0.01 - 20 Gew.-% eines Luftporenbildners, und
   - mindestens ein Lösemittel,
b) optional Zugabe von Wasser.

Das Zusatzmittel der vorliegenden Erfindung kann beispielsweise vor, während und/oder nach der Zugabe des Anmachwassers zur mineralischen Bindemittelzusammensetzung gegeben werden. Die mineralische Bindemittelzusammensetzung kann dabei beispielsweise bereits trocken oder nass vorgemischt vorliegen.

Es ist aber auch möglich, das Zusatzmittel mit einer einzelnen oder mehreren Komponenten der mineralischen Bindemittelzusammensetzung, beispielsweise dem Bindemittel, vorzumischen und dann die mineralische Bindemittelzusammensetzung in herkömmlicher Art und Weise anzumachen.

Ebenso kann das Zusatzmittel vorgängig mit einem weiteren Zusatzmittel, z.B. einem Verflüssiger, in Form einer Suspension, einer Aufschlämmung oder eines Feststoffgemischs vermischt werden. Diese Mischung kann sodann beim Anmachen der mineralischen Bindemittelzusammensetzung wiederum in herkömmlicher Art und Weise zugegeben werden.

Als weitere Zusatzmittel können Verflüssiger, wie beispielsweise Lignosulfonate, sulfonierte Naphthalin-Formaldehyd-Kondensate, sulfonierte Melamin-Formaldehyd-Kondensate und/oder Polycarboxylatether (PCE) verwendet werden. Verflüssiger auf Polycarboxylatether-Basis (PCE) sind dabei besonders bevorzugt. Ebenso können die weiteren Zusatzmittel z.B. Beschleuniger, Korrosionsinhibitoren, Pigmente, Verzögerer, Fasern, Stabilisierer, Schwindreduzierer, Entschäumer und/oder Schaumbildner enthalten.

Spezifische Substanzen, welche als weitere Zusatzmittel eingesetzt werden können sind z.B. Thiocyanate, Thiolufate, Sulfate, Nitrate, Nitrite, Hydroxide, Acetate, Formiate, Chloride, Glycerol, Aminoalkohole, organische Säuren, anorganische Säuren und/oder Latex.

Durch die Kombination mit einem weiteren Zusatzmittel lassen sich unter anderem multifunktionale Zusatzmittel erhalten.

Es hat sich als vorteilhaft herausgestellt, dass zur Erreichung der oben genannten FTB, keine zusätzliche Luft in eine mineralische Bindemittelzusammensetzung eingebracht werden muss. Die durch das Zusatzmittel der vorliegenden Erfindung eingebrachte Menge an Luft ist dazu ausreichend. Dies hat die Vorteile einer guten Reproduzierbarkeit und einer maximaler Unabhängigkeit vom Mischprozess.

Es ist möglich, ein Zusatzmittel der vorliegenden Erfindung mittels üblicher und dem Fachmann an sich bekannter Anlagen zur Dosierung und Einmischung flüssiger Zusatzmittel in mineralische Bindemittelzusammensetzungen einzubringen.

Es hat sich gezeigt, dass die Freisetzung von Luft innerhalb von 180 Minuten, bevorzugt innerhalb von 120 Minuten, besonders bevorzugt innerhalb von 60 Minuten nach Abschluss eines Mischvorganges der mineralischen Bindemittelzusammensetzung mit Wasser zu > 60 %, bevorzugt > 80%, besonders bevorzugt > 90% abgeschlossen ist. Dies insbesondere, wenn der Mischvorgang bei Temperaturen zwischen 5 °C - 60 °C, bevorzugt 10 °C - 45 °C ausgeführt wird.

Es ist weiterhin möglich, die mineralische Bindemittelzusammensetzung aushärten zu lassen, insbesondere nach Zugabe von Anmachwasser. Die Aushärtung erfolgt insbesondere bei Temperaturen zwischen 5 °C - 60 °C, bevorzugt 10 °C - 45 °C. Es ist ausgeschlossen, dass der Prozess der vorliegenden Erfindung einen Schritt zur Aushärtung und/oder Behandlung der mineralischen Bindemittelzusammensetzung in einem Autoklaven umfasst.

Weitere vorteilhafte Ausführungen der Erfindung ergeben sich aus den nachfolgenden Ausführungsbeispielen.

### Ausführungsbeispiele

### Bereitstellung von Luftporen bildenden Zusammensetzungen

Zur Herstellung einer Luftporen bildenden Zusammensetzung wurden zunächst 0.15 g Diutan Gum (Kelcocrete DG-F), 0.4 g Methyltriglycol und 96.35 g Wasser gemischt. Dazu wurden 2.4 g einer homogenen Mischung aus 41.7 Gew.-% Aluminiumpartikel (non-leafing, Partikelgrösse D50 = 6 µm) und 58.3 Gew.-% eines nicht-ionischen Tensids (Dynol 960 von Evonik) gegeben. Schliesslich wurden 1.5 g Natriumlaurylethersulfat zugegeben und alle Bestandteile wurden auf einem Flügelrührwerk vermischt, bis eine optisch homogene Dispersion vorlag. Die Dispersion wird im Folgenden als **LP-1** bezeichnet.

In Vergleichsversuchen wurde ein pulverförmiger Luftporenbildner **LP-R** benutzt. Dieser wurde erhalten durch Vermischung von 1 g Aluminiumpulver (Partikelgrösse D50 = 5 µm, Siebrückstand bei 45 µm von < 0.1 Gew.-%) sowie 0.64 g destilliertes Tallöl mit 99 g pulverförmigem Calciumcarbonat (Produkt "Neckafill", erhältlich bei Kalkfabrik Netstal, Schweiz).

Die durchschnittliche Partikelgrösse (D50) wurde gemäss Norm ISO 13320:2009 mit einem Gerät Mastersizer 2000, einer Dispergiereinheit Hydro 2000G und der Software Mastersizer 2000 der Firma Malvern Instruments GmbH (Deutschland) mit Isopropanol als Messmedium bestimmt.

### Betontests 1

Die Wirksamkeit der Luftporenbildner **LP-1** und **LP-R** wurde in Betonmischungen getestet. In Tabelle 1 ist die allgemeine Trockenzusammensetzung der verwendeten Betonmischung aufgeführt.

**Tabelle 1: Trockenzusammensetzung der Betonmischung**

| (Grösstkorn 32mm) | Menge in kg |
|---|---|
| Zement* | 9.72 |
| Kalksteinfüllstoff | 2.50 |
| Sand 0-1 mm | 7.0 |
| Sand 1-4 mm | 10.50 |
| Sand 4-8 mm | 7.50 |
| Sand 8-16 mm | 7.50 |
| Sand 16-32 mm | 15.0 |

| | |
|---|---|
| * CEM I 42.5 N (1:1:1 Gemisch nach Gewicht aus Schweizer Zementsorten Holcim, Vigier, Jura-Cement) mit einer Blaine-Feinheit von ca. 3'400 cm²/g | |

Zum Anmachen der Betonzusammensetzungen wurden die Sande, der Kalksteinfüllstoff und der Zement 30 Sekunden lang in einem Zyklos-Mischer der Firma Robert Aebi AG trocken gemischt. Innerhalb von 10 Sekunden wurde das Anmachwasser, in welchem zusätzlich ein Betonverflüssiger gelöst oder dispergiert war, sowie der Luftporenbildner **LP-1** bzw. **LP-R** (jeweils 1 Gew.-% bezogen auf den Bindemittelgehalt) zugegeben und noch weitere 90 Sekunden gemischt. Der Wasser/Zement-Wert (w/z-Wert) betrug 0.45.

Allen Betonzusammensetzungen wurden zusätzlich 0.45 Gew.-%, bezogen auf den Bindemittelgehalt, eines Betonverflüssiger (Sika® Viscocrete® 3082; erhältlich bei Sika Schweiz AG) zugeben, um die Verarbeitbarkeit der Betonzusammensetzungen zu verbessern.

Eine Minute nach dem Mischen der Betonzusammensetzungen wurde das jeweilige Ausbreitmass (ABM) gemäss Norm EN 12350-5 bestimmt.

Die Prüfung zur Bestimmung der Frost-Tausalz-Beständigkeit (FTB) erfolgte an Würfeln (15 x 15 x 15 cm) gemäss Norm SIA 262-1 Anhang C.

Der Luftgehalt wurde 5 Minuten sowie 30 Minuten nach dem Anmachen gemäss Norm EN 12350-7 ermittelt.

Die Druckfestigkeit wurde an Würfeln (15 x 15 x 15 cm) gemäss Norm EN 12390-3 bestimmt, welche gemäss den Vorgaben der Norm EN 12390-2 hergestellt und gelagert wurden.

Die Resultate der Betontests sind in Tabelle 2 zusammengefasst. **R1** ist eine nicht-erfindungsgemässe Referenzprobe, welche in analoger Weise wie die übrigen Betonmischungen aber ohne Zugabe eines Luftporenbildners hergestellt wurden. **R2** ist eine entsprechende nicht-erfindungsgemässe Referenzprobe mit **LP-R.** V1 ist eine erfindungsgemässe Probe mit **LP-1.**

**Tabelle 2: Resultate Betontests 1**

| Probe | Luftporenbildner | Ausbreitmass [cm] | Luftgehalt [%] | | Druckfestigkeit [MPa] | | FTB [g/m²]* |
|---|---|---|---|---|---|---|---|
| | | | 5 min | 30 min | 1 d | 28 d | |
| R1 | - | 51 | 1.5 | 1.6 | 30 | 59 | 1400 ± 800 |
| R2 | LP-R | 50 | 5.3 | 4.4 | 24 | 50 | 50 ± 13 |
| V1 | LP-1 | 50 | 4.0 | 4.3 | 26 | 50 | 30 ± 4 |

| | | | | | | | |
|---|---|---|---|---|---|---|---|
| * Je geringer der gemessene Wert, desto besser die Frost-Tausalz-Beständigkeit | | | | | | | |

Aus den Ergebnissen der Tabelle 2 wird deutlich, dass keiner der Luftporenbildner LP-R oder LP-1 einen wesentlichen Einfluss auf das Ausbreitmass der Betonmischungen hat. Bei Einsatz sowohl von LP-R als auch von LP-1 erhöht sich der Luftgehalt signifikant gegenüber der Referenz R1, die keinen Luftporenbildner enthält. Nach 30 min ist der Luftgehalt der Mischungen R2 und V1 praktisch gleich. Im Vergleich zur Referenz R1 haben sowohl R2, als auch V1 deutlich verbesserte FTB. Die erfindungsgemässe probe V1 zeigt dabei nochmals etwas verbesserte Beständigkeit gegenüber der nicht erfindungsgemässen Probe R2.

### Betontest 2

Der Luftgehalt einer Betonzusammensetzung wurde über die Zeit bestimmt. Dazu wurden 9.8 kg Zement (CEM I 42,5 N) und 51.54 kg Sand (0-32 mm) für 30 Sekunden in einem Zyklos-Mischer der Firma Robert Aebi AG trocken vermischt. Zu dieser Mischung wurden 1.0 Gew.-% LP-1 sowie 0.8 Gew.-% eines Betonverflüssiger (Sika® Viscocrete® 3088 S; erhältlich bei Sika Schweiz AG), beide dispergiert in Wasser zugegeben. Die Gesamtmenge an Wasser wurde so gewählt, dass ein w/z-Wert von 0.44 resultierte. Die Mischung wurde für 90 Sekunden nass gemischt. Dann wurde der Luftgehalt dieser Probe gemäss Norm EN 12350-7 ermittelt.

Die folgende Tabelle 3 enthält eine Übersicht der Ergebnisse. Die Probe V2 ist die Betonzusammensetzung wir vorgängig beschrieben. Die Probe R3 ist eine identische Betonzusammensetzung, allerdings ohne die Zugabe von LP-1. Die Zeitangaben beziehen sich auf die Zeit nach Abschluss des Mischvorganges.

**Tabelle 3: Resultate Betontest 2**

| Zeit [min] | Luftgehalt Probe V2 [%] | Luftgehalt Probe R3 [%] |
|---|---|---|
| 0 | 1.9 | 1.5 |
| 8 | 2.5 | 1.5 |
| 12 | 3.2 | 1.5 |
| 20 | 3.4 | 1.5 |
| 28 | 3.5 | 1.5 |
| 40 | 3.6 | 1.5 |
| 50 | 3.7 | 1.5 |

Wie aus Tabelle 3 ersichtlich ist der Luftgehalt der erfindungsgemässen Probe V2 deutlich höher, als der Luftgehalt der Referenz R3. Weiterhin wird aus Tabelle 3 deutlich, dass der Luftgehalt der Probe V2 nach Abschluss des Mischvorganges sehr schnell ansteigt und bereits innerhalb von weniger als 60 Minuten nach Abschluss des Mischvorgangs zu > 90% abgeschlossen ist.

## Patentansprüche

1. Zusatzmittel für mineralische Bindemittelzusammensetzungen umfassend, jeweils bezogen auf die Gesamtmasse des Zusatzmittels,
a) 0.01 - 10 Gew.-% eines Reduktionsmittels,
b) 0.01 - 10 Gew.-% eines Verdickungsmittels,
c) 0.01 - 20 Gew.-% eines Luftporenbildners, und
d) mindestens ein Lösemittel.

2. Zusatzmittel gemäss Anspruch 1, **dadurch gekennzeichnet, dass** das Reduktionsmittel ausgewählt ist aus der Gruppe bestehend aus Aluminium, Vanadium, Mangan, Zink, Magnesium.

3. Zusatzmittel gemäss einem der Ansprüche 1 oder 2, **dadurch gekennzeichnet, dass** das Reduktionsmittel eine Partikelgrösse D50 von < 25 µm hat.

4. Zusatzmittel gemäss einem der Ansprüche 1 - 3, **dadurch gekennzeichnet, dass** das Reduktionsmittel oberflächenbeschichtete Partikel, bevorzugt non-leafing Pigmente, umfasst, welche mit Wasser reaktionsfähig und nicht inertisiert sind.

5. Zusatzmittel gemäss Anspruch 1, **dadurch gekennzeichnet, dass** das Lösemittel Wasser ist und der Anteil Wasser, bezogen auf die Gesamtmasse des Zusatzmittels, > 50 Gew.-%, bevorzugt > 60 Gew.-%, besonders bevorzugt > 70 Gew.-%, ganz besonders bevorzugt > 80 Gew.-%, im Besonderen > 90 Gew.-% oder > 95 Gew.-% beträgt.

6. Zusatzmittel gemäss Anspruch 1, **dadurch gekennzeichnet, dass** das Verdickungsmittel ausgewählt ist aus der Gruppe bestehend aus Schichtsilikaten, insbesondere Bentonit, Polysacchariden, insbesondere Stärke, Pektin, Diutan Gum, Xanthan Gum, Gellan Gum, Guar Gum, Welan Gum, und/oder Carrageen, Cellulosen, insbesondere Carboxymethylcellulosen und/oder Celluloseether wie Hydroxyalkylcellulose, Polyvinylalkoholen, Poly(meth)acrylsäuren, Polyacrylamiden, Polyvinylpyrrolidonen, Polyethylenglykolen, Polyurethanen, Polyamiden, und/oder Proteinen, insbesondere Gelatine und/oder Casein.

7. Verwendung eines Zusatzmittels gemäss einem der Ansprüche 1 - 7 zur Verbesserung der Frost-Beständigkeit und/oder Frost-Tausalz-Beständigkeit einer mineralischen Bindemittelzusammensetzung.

8. Verwendung eines Zusatzmittels gemäss Anspruch 7, **dadurch gekennzeichnet, dass** das Reduktionsmittel mit einer Dosierung von 0.0005 - 0.1 Gew.-% bezogen auf die Masse an mineralischem Bindemittel eingesetzt wird.

9. Mineralische Bindemittelzusammensetzung umfassend
a) mindestens ein mineralisches Bindemittel,
b) ein Zusatzmittel gemäss einem der Ansprüche 1-6,
c) optional Aggregate,
d) optional Füllstoffe,
e) optional weitere Zusatzmittel.

10. Formkörper erhältlich durch Aushärtung einer mineralischen Bindemittelzusammensetzung gemäss Anspruch 9 nach Zugabe von Wasser.

11. Formkörper gemäss Anspruch 10, **gekennzeichnet durch** eine Dichte von ≥ 1.0 kg/L, bevorzugt ≥ 1.5 kg/L, besonders bevorzugt ≥ 2.0 kg/L, im Besonderen im Bereich von 2.1 - 2.6 kg/L.

12. Formkörper gemäss Anspruch 10, **gekennzeichnet durch** eine Frost-Beständigkeit und/oder Frost-Tausalz-Beständigkeit entsprechend der Expositionsklasse XF1, bevorzugt XF2, insbesondere XF3, besonders bevorzugt XF4, bestimmt nach Norm EN 206-1.

13. Prozess zur Herstellung einer mineralischen Bindemittelzusammensetzung umfassend die Schritte
a) Zugabe eines Zusatzmittels umfassend
- 0.01 - 10 Gew.-% eines Reduktionsmittels,
- 0.01 - 10 Gew.-% eines Verdickungsmittels,
- 0.01 - 20 Gew.-% eines Luftporenbildners, und
- mindestens ein Lösemittel,
b) optional Zugabe von Wasser
zu einer mineralischen Bindemittelzusammensetzung.

14. Prozess gemäss Anspruch 13, **dadurch gekennzeichnet, dass** die Freisetzung von Luft innerhalb von 180 Minuten, bevorzugt innerhalb von 120 Minuten, besonders bevorzugt innerhalb von 60 Minuten nach Abschluss eines Mischvorganges der mineralischen Bindemittelzusammensetzung mit Wasser zu > 60 %, bevorzugt > 80%, besonders bevorzugt > 90% abgeschlossen ist.
